# EUROPEAN PATENT SPECIFICATION

(11) **EP 1 518 368 B1**
(45) Date of publication and mention of the grant of the patent: **29.07.2009**
(21) Application number: 02738536.8
(22) Date of filing: 28.06.2002
(51) Int. Cl.: H04L 12/56

(54) **LOAD BALANCING DEVICE AND METHOD THEREFOR**
LASTAUSGLEICHEINRICHTUNG UND VERFAHREN DAFÜR
DISPOSITIFS D'EQUILIBRAGE DE CHARGE ET SON PROCEDE

(43) Date of publication of application: 30.03.2005
(73) Proprietor: Nokia Corporation, 02150 Espoo (FI)
(72) Inventor: KOISTINEN, Tommi, FIN-01600 Vantaa (FI); HALMET, Karo, FIN-00180 Helsinki (FI); LEPÄNAHO, Henrik, FIN-00810 Helsinki (FI)
(74) Representative: TBK-Patent
(86) International application number: PCT/IB2002/002492
(87) International publication number: WO 2004/004245

(56) References cited:
- EP-A- 0 782 072
- EP-A- 1 022 658
- WO-A-96/18149
- US-A- 4 748 558
- US-A- 5 655 120
- US-A- 5 978 844
- US-A- 5 991 808
- US-A1- 2001 043 585
- US-A1- 2002 064 160
- US-A1- 2002 087 694
- US-B1- 6 272 522

## Description

The present invention relates to an automated load balancing and substantially streamlined resource management in a communication system. The present invention is particularly applicable when high-speed packet based links are interfaced with signal processing resources.

Document US 6,272,522 B1 discloses a computer data packet switching and load balancing system using a general-purpose multiprocessor architecture. Specifically, a data packet switching and server load balancing device is provided by a general-purpose multiprocessor computer system. The general-purpose multiprocessor computer system comprises a plurality of symmetrical processors coupled together by a common data bus, a main memory shared by the processors, and a plurality of network interfaces each adapted to be coupled to respective external networks for receiving and sending data packets via a particular communication protocol, such as Transmission Control Protocol/Internet Protocol (TCP/IP). A first one of the processors is adapted to serve as a control processor and remaining ones of the processors are adapted to serve as data packet switching processors. The data packet switching processors are each coupled to at least one of the plurality of network interfaces.

Typically, in present communication systems a resource management functionality plays a significant role in any network element providing heterogeneous signal processing services. This means that several processing units must be dedicated to provide the resource management functionality. Also, quite a high amount of the internal communication bandwidth must be reserved for exchanging the resource management related control messages. However, increasing the number of the media processing units may cause the resource manager to become a bottleneck that may mean a reduced overall cost-efficiency, and, in practice, longer latency times when responding to new service requests.

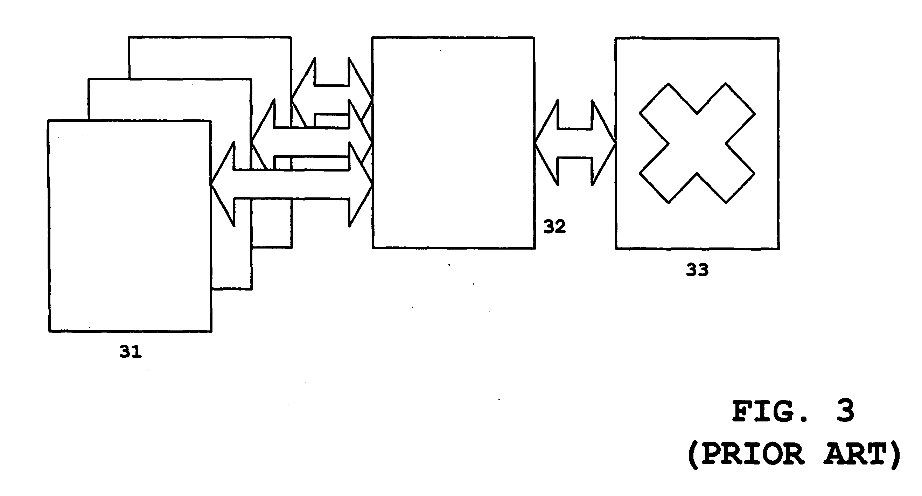

Fig. 3 depicts an arrangement where a load balancing device 32 is used in a conventional way. Reference numeral 33 designates a device for routing packets of a communication connection. Particularly, according to this prior art, the processing unit is selected out of a plurality of processing units 31 on a per-connection basis.

However, the prior art described above suffers from the following drawbacks. This conventional resource management system is not scaleable which means that there is a large number of dedicated units as well as a large number of control messages. In addition, delays in responding to service requests occur. Moreover, the utilization of statistical multiplexing inflicts difficulties.

Particularly, the processing times in the packet switched connection according to the prior art are not deterministic. Specifically, in the conventional arrangement, one digital signal processor (DSP) is receiving and processing several channels (e.g. 8...16) simultaneously. This means that a packet must wait a non-deterministic time before it is processed, that is, depending on how many channels are processed before that specific channel.

Accordingly, it is an object of the present invention to overcome these shortcomings of the prior art and to provide a streamlined and cost-effective way to manage the available resource pool.

According to the present invention, the object is solved by what is set forth in the appended independent claims. Advantageous modifications thereof are defined in the appended dependent claims.

The method, device and system according to the present invention provide a more effective utilization of the media processing resources, since the resources are managed on the basis of an effective resource allocation of the whole network element instead of managing resource allocations of single processing units. Thus, the benefits of a statistical multiplexing can be exploited easily.

An additional benefit is the deterministic, i.e. optimal, processing time that a single packet always encounters, since a processing unit serves only one packet at a time.

Moreover, with the method, device and system according to the present invention, the processing delay of a received packet is always optimal and very constant. Consequently, a constant processing time minimizes unwanted jitter and other possible fluctuations of the traffic flow.

Further details and advantages of the present invention as well as further modifications thereof are apparent from the detailed description of the preferred embodiments which are to be taken in conjunction with the appended drawings, in which:
Fig. 1 shows a first embodiment of the present invention;
Fig. 2 shows a second embodiment of the present invention; and
Fig. 3 shows a conventional arrangement.

The present invention introduces a load balancing unit (or DSP selector) in front of the DSP resource pool. The main idea behind the load balancing unit is to remove (or at least substantially reduce) the need for separate and poorly scaleable resource management layers.

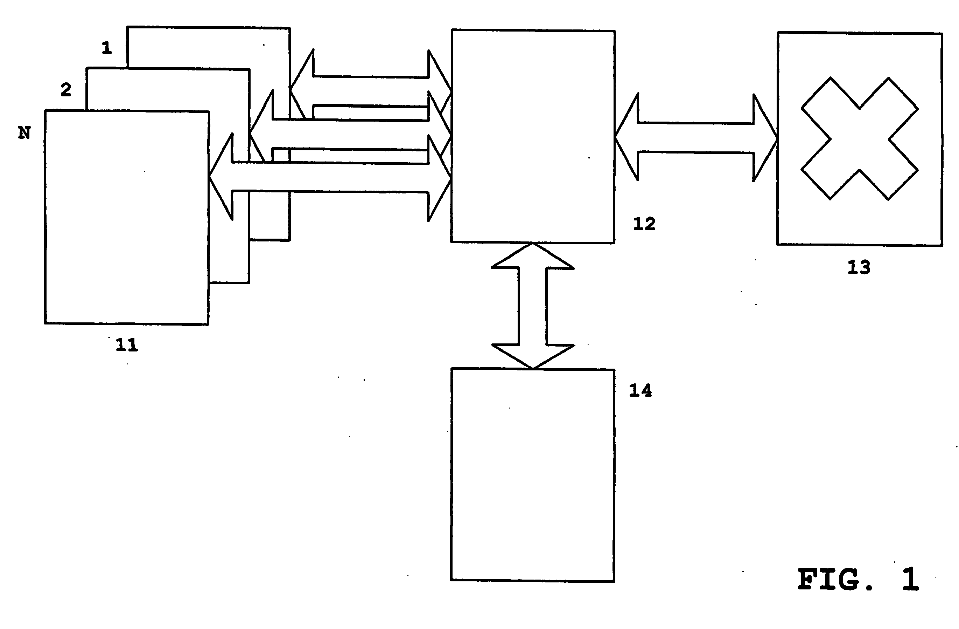

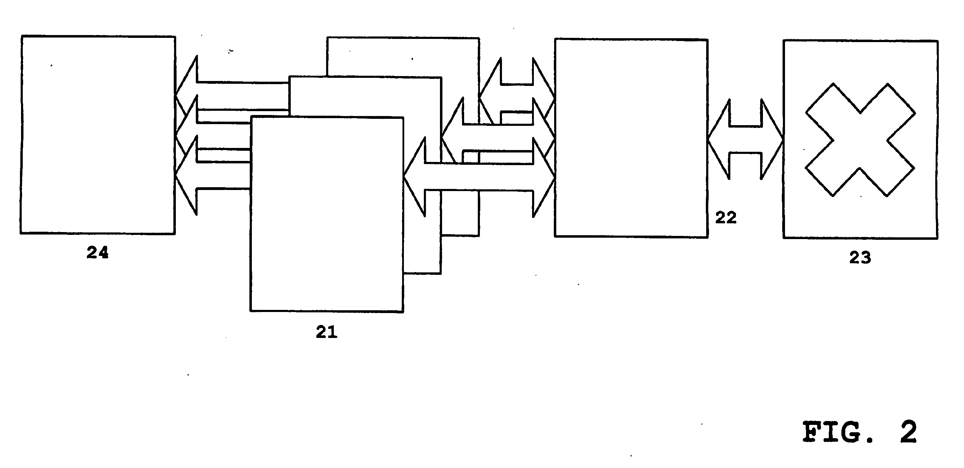

The figures 1 and 2 present the two preferred implementation options. It is common to both implementations that the processing unit is selected by the load balancing unit on a per-packet basis.

Specifically, in fig. 1, reference numeral 11 designates 1...N processing units for serving packets of a communication connection; reference numeral 12 designates the load balancing unit; reference numeral 14 designates a data storage; and reference numeral 13 designates a routing device for routing packets of a communication connection.

According to the arrangement depicted in fig. 1, a connection state is stored in the data storage 14 by the load balancing unit 12 as will be apparent from the description given below.

Next, in fig. 2, reference numeral 21 designates 1...N processing units for serving packets of a communication connection; reference numeral 22 designates the load balancing unit; reference numeral 24 designates a shared data storage; and reference numeral 23 designates a routing device for routing packets of a communication connection.

According to the arrangement depicted in fig. 2, a connection state is stored in the shared data storage 24 by processing units 21 as will be apparent from the description given below.

What is common to both implementations is that the load balancing unit keeps track of the total utilization of the processing units and this overall load information can be provided for other network management processes. Specifically, the arrangement that is depicted in figures 1 and 2 provides a streamlined and more cost-effective way to manage the available resource pool. The main idea behind the present invention is that the single processing units are not dedicated to serve a specific connection (or a call). Instead, the load balancing unit selects any free processing unit on a per-packet basis. The current connection state is obtained from a data storage that may be located either at the load balancing unit (fig. 1) or at the processing units (as shared memory as is depicted in fig. 2). In the former case, it would be essential that the connection state is inserted into the packets by the load balancing unit. The load balancing unit maintains the load state of each processing unit (preferably as a Boolean state) and selects any of the free (=non-active) processing units to serve and process the received packet. The selection of a processing unit, e.g. in a round-robin fashion, results the automatic load balancing for the system. A supported service profile for each processing unit (e.g. only GSM codecs) may also be maintained and used as an additional selection criteria.

Furthermore, the conveyance of the load state from each processing unit to the load balancing unit may happen either by a hardware based mechanism (such as dedicated pin, shared memory etc.) or a packet based mechanism (such as inserting the load state to returning (processed) packets or just interpreting a returning packet as a flag for a free resource). The load balancing unit and the processing units may be interconnected for example with Ethernet/IP, thus they do not require a physical co-location.

Some functionalities that the processing units, the load balancing unit and the data storage provide in preferred embodiments of the invention are outlined in the following.

The processing unit implements a mechanism to inform the load status to the load balancing unit which can be a hardware based mechanism (dedicated pin, shared memory etc.) or a packet based, e.g. inserting the status in the processed packets. Further, the processing unit comprises means for obtaining the connection state from the data storage or from the received packet.

The load balancing unit which can also be one of the processing units implements a table that contains the load status of each DSP unit in a Boolean format (free or not free) or as a percentage of load (0...100% load). Further, it comprises means for selecting a resource based on the load status, wherein a parameter that indicates the supported service profile for each processing unit (e.g. only EFR codec) may also be used as an additional selection variable. Optionally, the load balancing unit may also comprise means for inserting the connection state to a routed packet.

The data storage has to maintain the connection states by mapping them to suitable connection identifiers such as UDP ports and may lock the states in order to handle bursts of packets.

While the above may be considered as a basic arrangement according to the present invention, further developments of the same invention may be as follows.

Since the state-of-the art signal processors consist of multiple cores (e.g. 4-8) per one physical chip, one possibility could be to implement the load balancing unit functionality inside each multi-core DSP device which usually have a shared memory (data storage) for all cores. This way, there would be two levels of load balancing: one for selecting the DSP and a second level for selecting a single core.

In addition, it would also be preferred to have a redirecting functionality. That is, the excess traffic of a first load balancing unit could be redirected to another load balancing unit if a certain limit (or load) is exceeded, i.e. when all or most of the processing units are active when a hew packet arrives.

According to the above, the benefits of a streamlined resource management, an automated load balancing between a high number of processing units, a more efficient utilization of the DSP resources resulting in a statistical multiplexing with a high number of processing units managed as a whole, the guaranteeing of a deterministic processing delay for each packet leading to a minimum delay and a smooth traffic pattern, and maintaining the possibility to still be able to dedicate processing units to a specific service as an optimal utilization of memory thus gaining a highest number of channels can be achieved.

According to the above, it is provided a method of balancing the load of resources in a packet switched connection within a communication system, said system comprising processing units 11; 21 for performing communication, at least one load balancing unit 12; 22 for distributing the load to said processing units 11; 21, and a data storage 14; 24, said method comprising the steps of: obtaining a current connection state as well as a current load state of said processing units from said data storage 14; 24; selecting by said load balancing unit 12; 22 a processing unit on a per-packet basis; and maintaining information about the load state of each processing unit 11; 21 so that said selecting step is performed by selecting a processing unit to serve and process a respective packet based on the load state.

While it is described above what is presently considered to be the preferred embodiments of the present invention, it is apparent to those skilled in the art that various modifications are possible to the present invention without departing from the scope thereof which is defined in the appended claims.

## Claims

1. A method for balancing the load of resources in a packet switched connection within a communication system, said system comprising processing units (11; 12) for performing communication, at least one load balancing unit (12; 22) for distributing the load to said processing units (11; 12), and a data storage (14; 24), said method comprising the steps of:
obtaining a current connection state as well as a current load state of said processing units from said data storage (14; 24);
**characterized by**
selecting by said load balancing unit (12; 22) a processing unit on a per packet basis irrespective of a specific connection to which a respective packet belongs;
maintaining information about the load state of each processing unit (11; 21) so that said selecting step is performed by selecting a processing unit to serve and process a respective packet based on the load state.

2. A method according to claim 1, wherein said data storage is accessed to by said load balancing unit.

3. A method according to claim 1, wherein said data storage is accessed to by said processing units.

4. A method according to claim 1, wherein said information about the load state is maintained as a Boolean state.

5. A method according to claim 1, wherein a processing unit is selected in a round-robin fashion.

6. A method according to claim 1, wherein a supported service profile for each processing unit is maintained.

7. A method according to claim 6, wherein said supported service profile is used as additional selection criteria.

8. A method according to claim 1, wherein said load balancing unit obtains a load state from each processing unit upon a hardware based mechanism.

9. A method according to claim 1, wherein said load balancing unit obtains a load state from each processing unit upon a packet based mechanism.

10. A method according to claim 9, wherein a load state of a processing unit is inserted into a packet processed by said unit.

11. A method according to claim 9, wherein a packet returned by a processing unit is interpreted as a flag for a free resource.

12. A method according to claim 1, wherein excess traffic is redirected to another load balancing unit, said excess traffic being defined upon the number of active processing units.

13. A method according to claim 1, wherein selecting comprises selecting a processing unit whose load state is free.

14. A device unit for balancing a load of each of multiple processing units performing a packet switched communication connection, comprising:
means for maintaining a load state of each of said processing units;
**characterized by**
means adapted to select a processing unit on the basis of a respective load state on a per packet basis irrespective of a specific connection to which a respective packet belongs.

15. A device according to claim 14, wherein a load state of a processing unit is contained in a table.

16. A device according to claim 14, wherein a load state of a processing unit is expressed as a Boolean value.

17. A device according to claim 14, wherein a load state of a processing unit is expressed as value which corresponds to the percentage of load.

18. A device according to claim 14, wherein said selecting means is adapted such that a processing unit is selected also on the basis of a parameter indicating the service profile supported by a respective processing unit.

19. A device according to claim 18, wherein said parameter is contained in a table.

20. A device according to claim 14, further comprising
means adapted to insert a communication connection state into a packet to be routed.

21. A device according to claim 14, wherein the processing units are comprised of multicore digital signal processing means having a shared data storage for all cores, whereby said device comprises a first level of load balancing for selecting a digital signal processing means and a second level of load balancing for selecting a single core.

22. A device according to claim 14, further comprising
means for redirecting excess traffic to another device according to claim 13, wherein said excess traffic is defined upon the number of active processing units.

23. A device according to claim 14, wherein the means adapted to select a processing unit is further adapted to select a processing unit whose load state is free.

24. A system adapted to perform a method according to any of the claims 1 to 13.

## Patentansprüche

1. Verfahren zum Ausgleichen der Last auf Betriebsmittel in einer paketvermittelten Verbindung innerhalb eines Kommunikationssystems, wobei das System Verarbeitungseinheiten (11; 12) zum Durchführen von Kommunikation, zumindest eine Lastausgleichseinheit (12; 22) zum Verteilen der Last auf die Verarbeitungseinheiten (11; 12), und einen Datenspeicher (14; 24) aufweist, wobei das Verfahren die folgenden Schritte aufweist:
Beziehen sowohl eines aktuellen Verbindungszustandes als auch eines aktuellen Lastzustandes der Verarbeitungseinheiten aus dem Datenspeicher (14; 24);
**gekennzeichnet durch**
paketweises Auswählen einer Verarbeitungseinheit durch die Lastausgleichseinheit (12; 22), unabhängig von einer spezifischen Verbindung zu der ein jeweilige Paket gehört;
Pflegen von Informationen über den Lastzustand jeder Verarbeitungseinheit (11; 21) derart, dass der Auswahlschritt durchgeführt wird **durch** Auswählen einer Verarbeitungseinheit basierend auf dem Lastzustand, um ein jeweiliges Paket zu liefern und zu verarbeiten.

2. Verfahren gemäß Anspruch 1, wobei durch die Lastausgleichseinheit auf den Datenspeicher zugegriffen wird.

3. Verfahren gemäß Anspruch 1, wobei durch die Verarbeitungseinheiten auf den Datenspeicher zugegriffen wird.

4. Verfahren gemäß Anspruch 1, wobei die Informationen über den Lastzustand als ein Boolescher Zustand gepflegt werden.

5. Verfahren gemäß Anspruch 1, wobei eine Verarbeitungseinheit in einer Round-Robin-Weise ausgewählt wird.

6. Verfahren gemäß Anspruch 1, wobei für jede Verarbeitungseinheit ein Profil unterstützter Dienste gepflegt wird.

7. Verfahren gemäß Anspruch 6, wobei das Profil unterstützter Dienste als zusätzliches Auswahlkriterium verwendet wird.

8. Verfahren gemäß Anspruch 1, wobei die Lastausgleichseinheit einen Lastzustand von jeder Verarbeitungseinheit anhand eines hardware-basierten Mechanismus bezieht.

9. Verfahren gemäß Anspruch 1, wobei die Lastausgleichseinheit einen Lastzustand von jeder Verarbeitungseinheit anhand eines paket-basierten Mechanismus bezieht.

10. Verfahren gemäß Anspruch 9, wobei ein Lastzustand einer Verarbeitungseinheit in ein durch die Einheit verarbeitetes Paket eingefügt wird.

11. Verfahren gemäß Anspruch 9, wobei ein durch eine Verarbeitungseinheit zurückgegebenes Paket als ein Signal für ein freies Betriebsmittel interpretiert wird.

12. Verfahren gemäß Anspruch 1, wobei überschüssiger Verkehr zu einer anderen Lastausgleichseinheit umgeleitet wird, wobei der überschüssige Verkehr anhand der Anzahl von aktiven Verarbeitungseinheiten definiert wird.

13. Verfahren gemäß Anspruch 1, wobei das Auswählen ein Auswählen einer Verarbeitungseinheit aufweist, deren Lastzustand ein freier ist.

14. Vorrichtungseinheit zum Ausgleich einer Last von jeder von mehreren eine paketvermittelte Kommunikationsverbindung durchführenden Verarbeitungseinheiten, mit:
einer Einrichtung zur Pflege eines Lastzustandes von jeder der Verarbeitungseinheiten;
**gekennzeichnet durch**
eine Einrichtung, die angepasst ist, um eine Verarbeitungseinheit auf der Grundlage eines jeweiligen Lastzustandes, unabhängig von einer spezifischen Verbindung zu der ein jeweiliges Paket gehört, paketweise auszuwählen.

15. Vorrichtung gemäß Anspruch 14, wobei ein Lastzustand einer Verarbeitungseinheit in einer Tabelle enthalten ist.

16. Vorrichtung gemäß Anspruch 14, wobei ein Lastzustand einer Verarbeitungseinheit als Boolescher Wert ausgedrückt ist.

17. Vorrichtung gemäß Anspruch 14, wobei ein Lastzustand einer Verarbeitungseinheit als Wert ausgedrückt ist, der dem prozentualen Anteil der Last entspricht.

18. Vorrichtung gemäß Anspruch 14, wobei die Auswahleinrichtung derart angepasst ist, das eine Verarbeitungseinheit auch auf der Grundlage eines Parameters ausgewählt wird, der das Profil der Dienste anzeigt, die durch eine jeweilige Verarbeitungseinheit unterstützt sind.

19. Vorrichtung gemäß Anspruch 18, wobei der Parameter in einer Tabelle enthalten ist.

20. Vorrichtung gemäß Anspruch 14, ferner mit
einer Einrichtung, die angepasst ist, um einen Kommunikationsverbindungszustand in ein Paket einzufügen, das weiterzuleiten ist.

21. Vorrichtung gemäß Anspruch 14, wobei die Verarbeitungseinheiten aus Multikern-Digital-Signal-Verarbeitungs-Einrichtungen mit einem von allen Kernen gemeinsam benutzten Datenspeicher bestehen, wobei die Vorrichtung eine erste Stufe eines Lastausgleiches zum Auswählen einer Digital-Signal-Verarbeitungs-Einrichtung und eine zweite Stufe eines Lastausgleiches zum Auswählen eines Einzelkernes aufweist.

22. Vorrichtung gemäß Anspruch 14, ferner mit
einer Einrichtung zum Umleiten von überschüssigem Verkehr an eine andere Vorrichtung gemäß Anspruch 13, wobei der überschüssige Verkehr anhand der Anzahl von aktiven Verarbeitungseinheiten definiert wird.

23. Vorrichtung gemäß Anspruch 14, wobei die zur Auswahl einer Verarbeitungseinheit angepasste Einrichtung ferner angepasst ist, um eine Verarbeitungseinheit auszuwählen, deren Lastzustand ein freier ist.

24. System, das angepasst ist, um ein Verfahren gemäß einem der Ansprüche 1 bis 13 durchzuführen.

## Revendications

1. Procédé pour équilibrer la charge de ressources dans une connexion à commutation de paquets à l'intérieur d'un système de communication, ledit système comprenant des unités de traitement (11 ; 12) pour effectuer une communication, au moins une unité d'équilibrage de charge (12 ; 22) pour distribuer la charge sur lesdites unités de traitement (11 ; 12), et un stockage de données (14 ; 24), ledit procédé comprenant l'étape consistant à :
obtenir un état de connexion actuel ainsi qu'un état de charge actuel desdites unités de traitement dudit stockage de données (14 ; 24) ;
**caractérisé par** les étapes consistant à :
sélectionner par ladite unité d'équilibrage de charge (12 ; 22) une unité de traitement sur une base par paquet indépendamment d'une connexion spécifique à laquelle un paquet respectif appartient ;
maintenir des informations au sujet de l'état de charge de chaque unité de traitement (11 ; 21) de sorte que ladite étape de sélection soit effectuée en sélectionnant une unité de traitement pour prendre en charge et traiter un paquet respectif sur la base de l'état de charge.

2. Procédé selon la revendication 1, dans lequel ledit stockage de données est accédé par ladite unité d'équilibrage de charge.

3. Procédé selon la revendication 1, dans lequel ledit stockage de données est accédé par lesdites unités de traitement.

4. Procédé selon la revendication 1, dans lequel lesdites informations au sujet de l'état de charge sont maintenues sous la forme d'un état booléen.

5. Procédé selon la revendication 1, dans lequel une unité de traitement est sélectionnée selon un tour de poule (Round Robin).

6. Procédé selon la revendication 1, dans lequel un profil de service pris en charge pour chaque unité de traitement est maintenu.

7. Procédé selon la revendication 6, dans lequel ledit profil de service pris en charge est utilisé en tant que critère de sélection supplémentaire.

8. Procédé selon la revendication 1, dans lequel ladite unité d'équilibrage de charge obtient un état de charge de chaque unité de traitement grâce à un mécanisme matériel.

9. Procédé selon la revendication 1, dans lequel ladite unité d'équilibrage de charge obtient un état de charge de chaque unité de traitement grâce à un mécanisme basé sur des paquets.

10. Procédé selon la revendication 9, dans lequel un état de charge d'une unité de traitement est inséré dans un paquet traité par ladite unité.

11. Procédé selon la revendication 9, dans lequel un paquet retourné par une unité de traitement est interprété comme un drapeau pour une ressource libre.

12. Procédé selon la revendication 1, dans lequel l'excédent de trafic est redirigé vers une autre unité d'équilibrage de charge, l'excédent de trafic étant défini selon le nombre d'unités de traitement actives.

13. Procédé selon la revendication 1, dans lequel la sélection comprend l'étape consistant à sélectionner une unité de traitement dont l'état de charge est libre.

14. Unité de dispositif pour équilibrer une charge de chacune de multiples unités de traitement effectuant une connexion de communication à commutation de paquets comprenant :
des moyens pour maintenir un état de charge de chacune desdites unités de traitement ;
**caractérisé par** :
des moyens aptes à sélectionner une unité de traitement en fonction d'un état de charge respectif sur une base par paquet indépendamment d'une connexion spécifique à laquelle un paquet respectif appartient.

15. Dispositif selon la revendication 14, dans lequel un état de charge d'une unité de traitement est contenu dans un tableau.

16. Dispositif selon la revendication 14, dans lequel un état de charge d'une unité de traitement est exprimé sous la forme d'une valeur booléenne.

17. Dispositif selon la revendication 14, dans lequel un état de charge d'une unité de traitement est exprimé sous la forme d'une valeur qui correspond au pourcentage de charge.

18. Dispositif selon la revendication 14, dans lequel lesdits moyens de sélection sont adaptés de sorte qu'une unité de traitement soit sélectionnée également sur la base d'un paramètre indiquant le profil de service pris en charge par une unité de traitement respective.

19. Dispositif selon la revendication 18, dans lequel ledit paramètre est contenu dans un tableau.

20. Dispositif selon la revendication 14, comprenant en outre
des moyens aptes à insérer un état de connexion de communication dans un paquet à acheminer.

21. Dispositif selon la revendication 14, dans lequel les unités de traitement se composent de moyens de traitement de signaux numériques à noyaux multiples ayant un stockage de données partagé pour tous les noyaux, moyennant quoi ledit dispositif comprend un premier niveau d'équilibrage de charge pour sélectionner un moyen de traitement de signal numérique et un deuxième niveau d'équilibrage de charge pour sélectionner un seul noyau.

22. Dispositif selon la revendication 14, comprenant en outre
des moyens pour rediriger l'excédent de trafic vers un autre dispositif selon la revendication 13, dans lequel ledit excédent de trafic est défini selon le nombre d'unités de traitement actives.

23. Dispositif selon la revendication 14, dans lequel les moyens aptes à sélectionner une unité de traitement sont en outre aptes à sélectionner une unité de traitement dont l'état de charge est libre.

24. Système apte à effectuer un procédé selon l'une quelconque des revendications 1 à 13.
